(19) Europäisches Patentamt / European Patent Office / Office européen des brevets

(11) **EP 4 397 698 A1**

(12) **EUROPEAN PATENT APPLICATION**
published in accordance with Art. 153(4) EPC

(43) Date of publication:
**10.07.2024 Bulletin 2024/28**

(21) Application number: **22864181.7**

(22) Date of filing: **05.08.2022**

(51) International Patent Classification (IPC):
**C08J 5/18** (2006.01)

(52) Cooperative Patent Classification (CPC):
**C08J 5/18;** Y02W 30/62

(86) International application number:
**PCT/JP2022/030148**

(87) International publication number:
**WO 2023/032595 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.09.2021 JP 2021142471**

(71) Applicant: Toyobo Co., Ltd.
**Kita-ku
Osaka-shi, Osaka 530-0001 (JP)**

(72) Inventors:
• **TAMARI, Noboru**
**Inuyama-shi, Aichi 484-8508 (JP)**
• **HARUTA, Masayuki**
**Inuyama-shi, Aichi 484-8508 (JP)**

(74) Representative: **Vossius & Partner
Patentanwälte Rechtsanwälte mbB
Siebertstrasse 3
81675 München (DE)**

(54) **BIAXIALLY-ORIENTED POLYETHYLENE TEREPHTHALATE FILM ROLL**

(57) To provide a film roll obtained by winding a biaxially oriented polyester film, which is a film fabricated using recycled raw materials derived from PET containers, is environmentally friendly, and has favorable productivity of the obtained film and can be obtained as a long film without breaking although the recycled raw material contains a large amount of foreign substances. The biaxially-oriented polyethylene terephthalate film roll obtained by winding a biaxially-oriented polyethylene terephthalate film that is fabricated using a recycled raw material derived from a PET container and satisfies the following (1) to (3) into a roll:

(1) a heat shrinkage rate in a machine direction of the film is 0.5% or more and 2.0% or less when measured at 150°C for 30 minutes;

(2) a plane orientation coefficient (ΔP) of the film is 0.16 or more and 0.17 or less as calculated from a refractive index measured based on JIS K 7142-1996 A method; and

(3) a number of foreign substances having a maximum length of 1.3 mm or more per 1000 $m^2$ of the film roll is 1 or more.

EP 4 397 698 A1

**Description**

TECHNICAL FIELD

The present invention relates to a biaxially-oriented polyethylene terephthalate film roll obtained by winding a biaxially oriented polyester film into a roll. More specifically, the present invention relates to a biaxially oriented polyester film roll that is fabricated using recycled raw materials derived from PET containers, is environmentally friendly, exhibits favorable film formability when using recycled raw materials derived from PET containers with a large number of foreign substances as well, and has excellent productivity.

BACKGROUND ART

Aromatic polyesters typified by polyethylene terephthalate (PET) exhibit excellent mechanical properties, chemical resistance and the like, and are widely used as formed products such as fibers and films. In particular, PET resin is inexpensive, also excellent in terms of hygiene, and is thus widely used as food containers and containers for beverages. In view of recent rise in environmental issues and resources conservation, used PET containers have been recycled for some time, and ways to utilize the containers are attracting attention.

It is said that the use of recycled raw materials derived from PET containers leads to $CO_2$ reduction, and there is a desire to increase the usage rate of recycled raw materials derived from PET containers even a little from the perspective of the global environment as well.

Recycled raw materials derived from PET containers are produced by collecting A-PET, which is used in PET bottles for beverages and containers for salads, vegetables and the like. However, materials that have come onto the market and become garbage are collected and regenerated into recycled raw materials, so the amount of foreign substances contained in the raw materials is greater than that in PET raw materials derived from fossil fuels. Therefore, the problem is that the obtained biaxially oriented polyester film often undergoes breaking due to foreign substances and the productivity decreases. The foreign substances used here refer to, for example, substances other than PET resin, such as PET bottle strip labels, gravel, and chemicals such as pesticides and insecticides that consumers have filled into PET bottles. In order to suppress breaking due to foreign substances, a method in which a film is formed by allowing a molten resin to pass through a filter having a high filtration accuracy may be mentioned. By this means, foreign substances are sufficiently removed, so breaking due to foreign substances decreases, but clogging occurs by accumulation of foreign substances on the filter. Therefore, it is necessary to replace the filter at fast cycles, resulting in poor productivity. Furthermore, there is also a method to remove foreign substances in stages by using filters with different opening sizes multiple times, but the melt line becomes longer and the molecular weight of the recycled raw material decreases, as a result, this also leads to a decrease in the mechanical strength of the obtained biaxially oriented polyester film.

Meanwhile, the problem of foreign substances can be solved by sorting out ones that are clean and free of dirt and the like among collected PET containers and regenerating these into recycled raw materials. However, it is bad for the environment if dirty PET containers cannot be recycled.

Patent Document 1 discloses a biaxially oriented polyester film fabricated using recycled PET bottle raw materials. In Patent Document 1, the filter back-pressure increase coefficient of the recycled raw material is suppressed to the same level as that of PET raw material derived from fossil fuels, and the obtained biaxially oriented polyester film also contains little foreign substances. However, in a case where collected PET containers are sorted and only those in clean condition are used, it is not sufficient as the effect of environment countermeasure. In a case where a sufficient filtration step is carried out during the production of recycled raw materials as well, it is expected that the filter replacement cycle is shortened and the productivity decreases.

PRIOR ART DOCUMENTS

PATENT DOCUMENTS

Patent Document 1: JP-A-2014-65282

SUMMARY OF THE INVENTION

PROBLEMS TO BE SOLVED BY THE INVENTION

The present invention has been devised in view of the problems of the conventional techniques. In other words, an object of the present invention is to provide a film roll obtained by winding a biaxially oriented polyester film, which is a film fabricated using recycled raw materials derived from PET containers, is environmentally friendly, and has favorable productivity of the obtained film and can be obtained as a long film without breaking although the recycled raw material contains a large amount of foreign substances.

MEANS FOR SOLVING THE PROBLEMS

As a result of intensive studies, the present inventors have found out that the productivity of the obtained film is favorable and a long film can be obtained without breaking although the recycled raw material contains a large amount of foreign substances by selecting a specific stretching condition range and controlling the degree of plane orientation of the film when recycled raw materials derived from PET containers are used as a raw material as well.

In other words, the present invention has the following configuration.

[1] A biaxially-oriented polyethylene terephthalate film roll obtained by winding a biaxially-oriented polyethylene terephthalate film that is fabricated using a recycled raw material derived from a PET container and satisfies the following (1) to (3) into a roll:

(1) a heat shrinkage rate in a machine direction of the film is 0.5% or more and 2.0% or less when measured at 150°C for 30 minutes;

(2) a plane orientation coefficient ($\Delta$P) of the film is 0.16 or more and 0.17 or less as calculated from a refractive index measured based on JIS K 7142-1996 A method; and

(3) a number of foreign substances having a maximum length of 1.3 mm or more per 1000 $m^2$ of the film roll is 1 or more.

[2] The biaxially-oriented polyethylene terephthalate film roll according to [1], in which the recycled raw material derived from a PET container according to [1] is a mechanically recycled polyester resin and/or a chemically recycled polyester resin.

[3] The biaxially-oriented polyethylene terephthalate film roll according to [1] or [2], wherein thickness unevenness per 800 mm in a transverse direction of the film is 18% or less.

[4] The biaxially-oriented polyethylene terephthalate film roll according to any one of [1] to [3], wherein breaking strength in a machine direction of the film is 180 MPa or more and 260 MPa or less and a breaking elongation is 80% or more and 170% or less.

[5] The biaxially-oriented polyethylene terephthalate film roll according to any one of [1] to [4], wherein a number of foreign substances having a maximum length of 1.0 mm or more per 8000 $m^2$ of the film roll is 16 or more.

[6] The biaxially-oriented polyethylene terephthalate film roll according to any one of [1] to [5], having a winding length of 10,000 m or more.

EFFECT OF THE INVENTION

In the biaxially oriented polyester film roll of the present invention, as recycled raw materials derived from PET containers are used as a raw material and the heat shrinkage rate in the machine direction of the film, the plane orientation coefficient ($\Delta$P), and the number of foreign substances are set in predetermined ranges, a biaxially oriented polyester film roll can be obtained which is environmentally friendly and has favorable productivity of the obtained film and can be obtained as a long film although the recycled raw material contains a large amount of foreign substances.

BRIEF DESCRIPTION OF THE DRAWINGS

Fig. 1 is a schematic diagram illustrating a TD stretching method of a logarithmic pattern in the present invention.

Fig. 2 is a schematic diagram illustrating a TD stretching method of a multistage stretching pattern in the present invention.

MODE FOR CARRYING OUT THE INVENTION

Hereinafter, the present invention will be described in detail.

The recycled raw material derived from PET containers preferably used in the present invention contains polyethylene terephthalate as a main component and may contain some colored components, and the form of the container to be recycled is not limited. Hereinafter, a polyester resin produced using recycled PET bottles will be described as an example, but the recycled raw material is not limited to this.

[polyester resin recycled from PET bottles]

As the polyester resin produced using recycled PET bottles in the present invention, polyester resins (hereinafter sometimes referred to as "mechanically recycled polyester resins") obtained by physical regeneration methods in which used PET bottles collected from the market and society are sorted, pulverized, and washed to sufficiently remove dirt on the surface and foreign substances, and then the PET bottles are exposed to a high temperature to thoroughly wash contaminants and the like remaining inside the resin and then pelletized again and polyester resins (hereinafter sometimes referred to as "chemically recycled polyester resins") obtained by decomposing the polyester resins contained in used packaging containers to the monomer level, then removing contaminants and the like, and performing polymerization again can be both suitably used.

In the biaxially oriented polyester film in the present invention, it is preferable to use the following polyester resin recycled from the market and society, including PET bottles. By using a polyester resin recycled from the market and society, including PET bottles, it is possible to increase the ratio of recycled raw materials in the film and obtain an environmentally friendly film.

The polyester resin recycled from the market and society, including PET bottles, which is used in the biaxially oriented polyester film of the present invention, contains as a main component a recycled product of a container containing polyethylene terephthalate as a main component. For example, recycled products of containers for beverages such as tea beverages and soft drinks can be preferably used, and these may be appropriately oriented, and are preferably colorless, but may contain some colored components.

The recycled raw material derived from PET containers, which is preferably used in the present invention, is polyester that is produced and formed by ordinary polymerization methods and solid phase polymerization methods, preferably contains polyethylene terephthalate as a main component, and may contain other polyester components and copolymerization components. A metal compound such as antimony, germanium, or titanium may be contained as a catalyst, and a phosphorus compound as a stabilizer may be contained.

Germanium is often used as a catalyst in polyester for PET bottles, and the film contains germanium at 1 ppm or more when the film is formed of a raw material recycled from PET bottles. However, the content of germanium is the content of the catalyst to the last, and is thus usually 100 ppm or less at most, and is usually 50 ppm or less.

Hereinafter, the mechanically recycled polyester resin and chemically recycled polyester resin will be described.

[Mechanically recycled polyester resin]

The collected used recyclable PET bottles are sorted so as not to be mixed with other materials and garbage, labels and the like are removed from the PET bottles, and then the PET bottles are crushed into flakes. Foreign substances are often attached to or mixed in these flakes. A case is also conceivable where consumers have filled chemical substances such as chemicals and solvents in the used PET bottles for use. For example, detergents for tableware and the like, pesticides, herbicides, pesticides and various kinds of oils are conceivable. It is preferable to perform alkaline cleaning since the chemical substances adsorbed on the surface of PET bottles cannot be sufficiently removed by normal cleaning. As the solution of the alkali metal hydroxide used in this cleaning step, a sodium hydroxide solution or a potassium hydroxide solution is used. In such a cleaning step, pre-cleaning may be performed before alkaline cleaning.

When alkaline cleaning is not performed, the chemical substances remain in the raw material resin as a foreign substance, thus these are mixed in and cause breakage during film formation, and this decreases the productivity, as well as the chemical substances remain in the film as a foreign substance and may cause the appearance of the film and printing omissions in the printing step performed later.

The concentration of the aqueous solution of an alkali metal hydroxide used in the cleaning step depends on the temperature, time, and stirring state but is usually in a range of 1 to 10% by weight. The time required for cleaning is in a range of 10 to 100 minutes, and it is preferable to perform the cleaning while performing stirring in order to enhance the effect.

It is preferable to perform rinsing and drying subsequently to the alkaline cleaning. Alkaline cleaning and rinsing may be repeatedly performed several times. When the aqueous solution components of an alkali metal hydroxide used for cleaning in the alkaline cleaning step remains in the flakes, these components may affect the physical properties of the film finally obtained through the melt extrusion step in the subsequent pellet granulation step and the melt extrusion step at the time of film formation.

The concentration of sodium and potassium in the film finally obtained by using the polyester resin recycled from the market and society, including these PET bottles is preferably more than 0 ppm and 150 ppm or less, more preferably 3 to 120 ppm, still more preferably 5 to 80 ppm. It is not preferable that the concentration of sodium or potassium contained in the film is higher than 150 ppm since the heat resistance and thermal stability of the film decrease or the film is colored. It is not preferable that sodium or potassium is not contained at all since the effect of suppressing the production of diethylene glycol is diminished. There is a case where slight amounts of these components are contained in the polyester resin recycled from the market and society, including PET bottles, and it is difficult to completely remove these components.

In such a cleaning step, a part of the PET bottle flakes is hydrolyzed by the aqueous solution of an alkali metal hydroxide. The degree of polymerization of the resin decreases by heating performed when PET bottles are molded. Furthermore, the degree of polymerization decreases by the influence of heat and water added when the recovered PET bottles are crushed for reuse, then melted again, and pelletized. The resin can be reused as it is, but cannot be reused as it is in some cases since the moldability, strength, transparency, heat resistance and the like are inferior depending on the used application when the degree of polymerization is decreased.

In such a case, in order to restore the decreased degree of polymerization, it is preferable to conduct solid phase polymerization of the flakes of PET bottles, which have been crushed and cleaned, or flakes, which have been melted and pelletized.

The solid phase polymerization step can be carried out by performing continuous solid phase polymerization of washed flakes or flakes, which have been melt-extruded and pelletized, in an inert gas such as nitrogen gas or noble gas at 180 to 245°C, preferably 200 to 240°C.

It is desirable to conduct the solid phase polymerization by adjusting the conditions of the flakes or pellets so that the limiting viscosity of the polyester resin recycled from the market and society, including PET bottles is finally 0.55 to 0.90 dl/g, preferably 0.60 to 0.85 dl/g.

The step of pelletizing the flakes will be described. The flakes are melted, extruded, cooled and granulated using an extruder equipped with degassing and filtering means.

The melting step in the extruder can be carried out by performing melting and kneading at 260 to 300°C, preferably 265 to 295°C. The crushed flakes of PET bottles to be put are required to be sufficiently dried, it is preferable to perform drying at 5 to 200, preferably 10 to 100 ppm, more preferably 15 to 50 ppm. When the amount of water contained in the flakes is large, the hydrolysis reaction proceeds in the melting step, and the limiting viscosity of the obtained polyester resin decreases. As the degassing means, those having at least one vacuum vent in the melting zone of the resin are preferable.

The extruder preferably has a filter capable of filtering and removing solid foreign substances having a particle size of 25 $\mu$m or more, preferably 15 $\mu$m or more, more preferably 10 $\mu$m or more in the molten resin as a filtering means.

The molten resin that has passed through the filter passes through a die, is cooled in water, and then is cut into pellets having a desired shape, and granulated.

[Polyester resin composition]

The biaxially oriented polyester film in the present invention is formed of a polyester resin composition containing the following polyester resin as a main component.

The polyester resin constituting the biaxially oriented polyester film of the present invention is a polymer synthesized from a dicarboxylic acid or an ester-forming derivative thereof and a diol or an ester-forming derivative thereof. Examples thereof include polyethylene terephthalate, polybutylene terephthalate, and polyethylene-2,6-naphthalate, and polyethylene terephthalate is preferable from the viewpoint of mechanical properties, heat resistance, cost and the like.

The main component here means one of which the content rate in the polyester resin composition is 80% by weight or more, and the content rate is preferably 90% by weight or more, more preferably 95% by weight or more, most preferably 98% by weight or more.

Other components may be copolymerized with these polyester resins as long as the object of the present invention is not impaired. Specifically, as the copolymerization components, examples of the dicarboxylic acid component include isophthalic acid, naphthalenedicarboxylic acid, 4,4-biphenyldicarboxylic acid, adipic acid, sebacic acid, and any ester-forming derivative thereof. Examples of the diol component include diethylene glycol, hexamethylene glycol, neopentyl glycol, and cyclohexanedimethanol. Examples of the diol component also include polyoxyalkylene glycols such as polyethylene glycol and polypropylene glycol. The amount of copolymerization is preferably 10 mol% or less, more preferably 5 mol% or less, most preferably 3 mol% or less per constituent repeating unit.

When the recycled raw material derived from PET containers of the present invention is melt-extruded at a temperature of 285°C, a filter filtration diameter of 20 $\mu$m, and a filtration rate of 6 g/min, the lower limit of the filter back-pressure increase coefficient is preferably 10 MPa/kg cm$^2$, more preferably 20 MPa/kg·cm$^2$, particularly preferably 30 MPa/kg·cm$^2$.

The filter back-pressure increase coefficient herein indicates the difficulty of filtration filter clogging when the resin is melt-extruded, and is determined by the following equation.

$$K = \Delta P / (Q/S)$$

Here, K: filter back-pressure increase coefficient,

$$\Delta P = P1 - P0$$

P1: pressure after 4 hours of extrusion (MPa), P0: pressure at the start of extrusion (MPa), Q: discharge rate during extrusion (kg/hr), and S: filter filtration area ($cm^2$)

As the filter back-pressure increase coefficient is set to 10 MPa/kg·$cm^2$ or more when the recycled raw material is melt-extruded under the conditions described above, it means that the recycled raw material is a recycled raw material derived from PET containers that have not been substantially sorted out, and the effect of environment countermeasure is sufficiently obtained.

When the recycled raw material derived from PET containers of the present invention is melt-extruded at a temperature of 285°C, a filter filtration diameter of 20 $\mu$m, and a filtration rate of 6 g/min, the upper limit of the filter back-pressure increase coefficient is preferably 100 MPa/kg·$cm^2$, more preferably 90 MPa/kg·$cm^2$, particularly preferably 80 MPa/kg·$cm^2$. As the filter back-pressure increase coefficient is set to 100 MPa/kg·$cm^2$ or less, favorable productivity can be achieved simply by adjusting the production conditions of the biaxially oriented polyester film.

[Chemically recycled polyester resin]

The method for producing the chemically recycled polyester resin used in the present invention is not particularly limited, but specifically, for example, as described in JP-A-2000-169623, there is a method in which collected used PET bottles were sorted, pulverized, and washed to remove foreign substances, and then subjected to depolymerization to be decomposed and purified into a raw material or intermediate raw material for PET resin, which is polymerized to obtain a new PET resin. Methods in which depolymerization is such that ethylene glycol (EG) is added, and, in the presence of a catalyst, this is made to return to as far as bis-2-hydroxyethyl terephthalate (BHET) which is an intermediate raw material during resin production, and following purification thereof this is repolymerized to PET, and methods in which, as described at JP-A-2000-302707, repolymerization is carried out following production of terephthalic acid and ethylene glycol as a result of heat treatment in a nonaqueous organic solvent in the presence of a catalyst in which iron is an essential component and polyethylene terephthalate is oxidized, may be cited as examples.

Because it is characteristic of chemically recycled polyester resins that whereas foreign matter and foreign substances are removed between depolymerization and repolymerization, and reconstitution thereof into a polyester resin that is of high quality equivalent in grade to that of virgin resin is permitted thereby, and because the hygienic properties thereof are superior to those of the aforementioned mechanically recycled polyester resins, these may in particular be favorably used in food packaging applications.

Bales of used PET bottles that have been compressed and reduced in volume serve as starting material for chemically recycled polyester resins used in accordance with the present invention. Such bales of PET bottles may be manufactured in accordance with known methods currently being utilized by municipalities. Other polyethylene terephthalate waste materials or PET bottle flakes may serve instead of bales of PET bottles as a starting material.

Bales of PET bottles obtained as a result of compression and reduction in volume of PET bottle waste material are fed into a grinder, warm water or water of normal temperature, or warm water or water of normal temperature which contains detergent, is injected thereinto, and pulverization is carried out in water.

Next, the mixture of liquid detergent and PET bottle flakes that is discharged from the grinder is immediately thereafter made to undergo processing for separation based on specific gravity, as a result of which metal, stone, glass, sand, and flakes are separated therefrom. Next, the flakes and liquid detergent are separated, and the flakes are washed with deionized water and made to undergo centrifugal dewatering.

The crude polyethylene terephthalate flakes obtained from the foregoing pretreatment operation are depolymerized and melted, and are simultaneously hydrolyzed and made into a polyethylene terephthalate melt having a low degree of polymerization, and an excess amount of ethylene glycol is used to carry out depolymerization to obtain a two-species solution containing a mixture of crude BHET and crude ethylene glycol.

Following completion of the depolymerization reaction, the temperature of the two-species solution containing the mixture of crude BHET and crude ethylene glycol is decreased, and this is filtered to remove high-melting-point sediment in the form of unreacted linear and cyclic oligomers, coagulated residue of foreign plastics other than polyethylene terephthalate, metal, and other such solid foreign matter, and this is then made to undergo adsorption/ion exchange treatment, removal of dissolved ions and colored substances being carried out to remove any foreign matter present within the crude BHET.

The two-species solution containing the mixture of crude BHET and crude ethylene glycol obtained by way of the foregoing prepurification operation is made to undergo a distillation/vaporization procedure, causing the ethylene glycol to be separated and distilled therefrom, to obtain concentrated BHET, or the two-species solution containing the mixture is cooled to 10°C or less to cause crystallization of BHET, following which the ethylene glycol and BHET are subjected to solid-liquid separation to obtain concentrated BHET, this concentrated BHET being subjected to vacuum evaporation such that temperature is more than 190°C and 250°C or less and such that residence time of the concentrated BHET within the evaporator is 10 minutes or less, to obtain purified bis-β-hydroxyethyl terephthalate.

After the foregoing has been carried out and purified BHET of high purity has been obtained, this purified BHET is loaded into a melt polycondensation reaction vessel to obtain polyethylene terephthalate polymer of high purity.

Among the polyester resins that may make up biaxially oriented polyester films in accordance with the present invention, besides mechanically recycled polyester resins and chemically recycled polyester resins, as methods for producing polyester resins derived from fossil fuels, methods in which the aforementioned dicarboxylic acid or an ester-forming derivative thereof and a diol or an ester-forming derivative thereof serving as primary starting materials are first, in accordance with ordinary methods, made to undergo an esterification and/or transesterification reaction, following which this is further made to undergo a polycondensation reaction under high temperature/vacuum conditions to carry out production thereof, and so forth may be cited as examples.

The intrinsic viscosity of the polyester resin constituting the biaxially oriented polyester film of the present invention is preferably in a range of 0.50 to 0.90 dl/g, more preferably in a range of 0.55 to 0.80 dl/g from the viewpoint of film formability and recycling properties.

The biaxially oriented polyester film of the present invention may contain conventionally known additives, for example, a lubricant, a stabilizer, a coloring agent, an oxidation inhibitor, an antistatic agent, and an ultraviolet absorber in addition to the polyester resin composition.

When the entire biaxially oriented polyester film of the present invention is regarded as 100% by mass, the content of the polyester resin composition is preferably 99.5% by mass or more, more preferably 99.6% by mass, most preferably 99.7% by mass.

The lubricant can adjust the coefficient of dynamic friction of the film, and examples thereof include inorganic lubricants such as silica, calcium carbonate, and alumina and organic lubricants. Silica and calcium carbonate are preferable, and porous silica is most preferable among these from the viewpoint of achieving both transparency and slipperiness.

The lower limit of the lubricant content in the biaxially oriented polyester film of the present invention is preferably 100 ppm by mass, more preferably 300 ppm by mass, most preferably 500 ppm by mass. As the lubricant content is set to 100 ppm by mass or more, favorable slipperiness of the film can be obtained.

The upper limit of the lubricant content in the biaxially oriented polyester film of the present invention is preferably 10000 ppm by mass, more preferably 6000 ppm by mass, most preferably 2000 ppm by mass. As the lubricant content is set to 10000 ppm by mass or less, favorable transparency of the film can be obtained.

[Production method for biaxially oriented polyester film]

The method for obtaining the biaxially oriented polyester film of the present invention is not particularly limited, and a T-die method, an inflation method, and the like can be selected as appropriate.

The film of the present invention may have a single-layer structure having at least one layer, or may have a laminated structure having two or more layers. The film of the present invention may have two layers, three layers, four layers, or five layers.

The upper limit of the cooling roll temperature is preferably 40°C, more preferably 20°C or less. When the cooling roll temperature is 40°C or more, the degree of crystallization does not become too high when the molten polyester resin composition is cooled and solidified, and stretching becomes easier as well as a decrease in transparency due to crystallization can also be suppressed.

The lower limit of the cooling roll temperature is preferably 0°C. When the cooling roll temperature is 0°C or more, it is possible to sufficiently exert the effect of suppressing crystallization when the molten polyester resin composition is cooled and solidified. In a case where the cooling roll temperature is set in the above range, it is preferable to lower the humidity of the environment in the vicinity of the cooling roll in order to prevent dew formation.

The thickness of the un-stretched sheet is suitably in a range of 15 to 2500 μm. The thickness of the un-stretched sheet is more preferably 600 μm or less, most preferably 400 μm or less.

Next, the stretching method will be described. The stretching method can be simultaneous biaxial stretching or sequential biaxial stretching.

The lower limit of the stretching temperature in the machine direction (hereinafter also referred to as MD direction) is preferably 90°C, more preferably 100°C, particularly preferably 110°C. When the stretching temperature is 110°C or more, the stretching stress can be reduced, so breaking due to foreign substances can be suppressed.

The upper limit of the stretching temperature in the MD direction is preferably 140°C, more preferably 130°C, particularly preferably 120°C. When the stretching temperature is 140°C or less, the stretching stress increases by crystallization, as a result, breaking due to foreign substances can be suppressed as well as the film also has favorable mechanical strength.

The lower limit of the stretching ratio in the MD direction is preferably 2.5 times, more preferably 2.8 times, particularly preferably 3.1 times. When the stretching ratio is 2.5 times or more, the film has not only favorable mechanical strength but also favorable thickness unevenness, leading to improved winding quality when rolled.

The upper limit of the stretching ratio in the MD direction is preferably 4.0 times, more preferably 3.8 times, particularly preferably 3.6 times. When the stretching ratio is 4.0 times or less, the stretching stress can be reduced, so breaking due to foreign substances can be suppressed.

It is preferable that there is a relaxation step in the MD direction between the stretching step in the MD direction and the subsequent stretching step in the transverse direction (hereinafter also referred to as TD direction).

The lower limit of the MD relaxation rate is preferably 1%, more preferably 3%, particularly preferably 5%. When the MD relaxation rate is 1% or more, the amorphous components in the film are relaxed, the stretching stress in the subsequent TD stretching step can be reduced, and as a result, breaking due to foreign substances can be suppressed.

The upper limit of the MD relaxation rate is preferably 10%, more preferably 8%, particularly preferably 6%. When MD relaxation rate is 10% or less, wrinkling due to shrinkage can be suppressed and not only the quality of the film can be improved but also a decrease in mechanical strength due to orientation relaxation can be suppressed.

The method for MD relaxation is not particularly limited, but for example, a method may be mentioned in which heating is performed using a hot air heater and then relaxation treatment is performed using a speed difference between rolls.

The lower limit of the stretching temperature in the TD direction is preferably 90°C, more preferably 100°C, particularly preferably 110°C. When the stretching temperature is 110°C or more, the stretching stress can be reduced, so breaking due to foreign substances can be suppressed.

The upper limit of the stretching temperature in the TD direction is preferably 140°C, more preferably 130°C, particularly preferably 120°C. When the stretching temperature is 140°C or less, the stretching stress increases by crystallization, as a result, breaking due to foreign substances can be suppressed as well as the film also has favorable mechanical strength.

The lower limit of the stretching ratio in the TD direction is preferably 2.5 times, more preferably 3.0 times, particularly preferably 3.5 times. When the stretching ratio is 2.5 times or more, the film has not only favorable mechanical strength but also favorable thickness unevenness, leading to improved winding quality when rolled.

The upper limit of the stretching ratio in the TD direction is preferably 5.0 times, more preferably 4.5 times, particularly preferably 4.0 times. When the stretching ratio is 5.0 times or less, the stretching stress can be reduced, so breaking due to foreign substances can be suppressed.

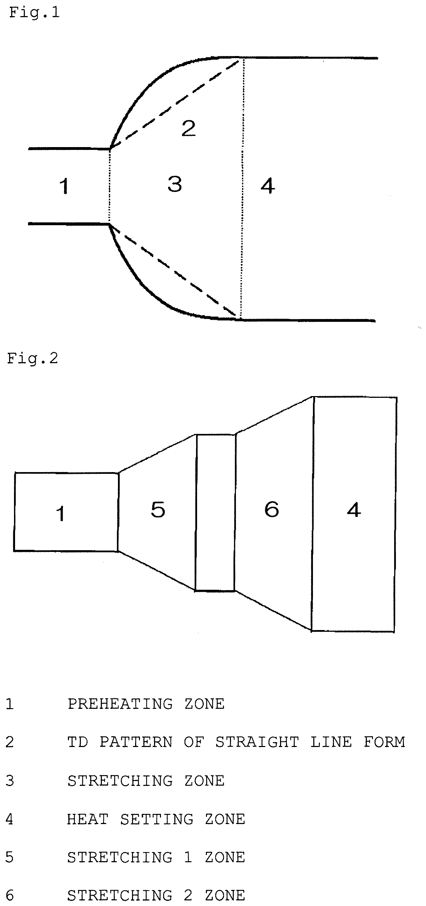

The stretching pattern in the TD direction is preferably logarithmic form or multistage stretching. Specifically, as illustrated in Figs. 1 and 2, the TD stretching pattern of logarithmic form is different from the normal TD stretching pattern of straight line form, in which the film is stretched greatly in the first half of the stretching and gently stretched in the second half of the stretching. By using such a TD stretching pattern, most of the stretching can be completed in the first half when the film stretching stress is low and the stretching stress applied during stretching can be reduced. As a result, breaking due to foreign substances can be suppressed.

Next, details of a case where a TD stretching pattern of logarithmic form is adopted will be described. As described above, the TD stretching pattern of logarithmic form refers to a TD stretching pattern in which the film is stretched greatly in the first half of the stretching and gently stretched in the second half of the stretching. In a case where the number of TD stretching zones is denoted as N and the stretching angle in the Nth stretching area is denoted as $\theta N$, the stretching is performed in the transverse direction under the condition that the stretching angle in each stretching zone is $\theta n > \theta n + 1$. (In a case where $\theta n = \theta n + 1$, it is normal straight line stretching)

The amount of change when the stretching angle changes from the stretching angle $\theta n$ to the stretching angle $\theta n + 1$ can also be appropriately selected in order to obtain the desired performance. However, in a case where the rate of change in angle expressed by $\{(\theta n - \theta n + 1)/\theta n\} \times 100$ (unit: %) is as large as more than 50%, it is inevitably necessary to increase the stretching ratio extremely high at the initial stage of TD stretching in order to perform stretching to a predetermined maximum ratio, and stretching stress at the initial stage of stretching becomes too large, which may adversely affect the film formability. In a case where the rate of change in angle is 0%, $\theta 1 = \theta 2$, so it is the same as the conventional stretching conditions using a tenter, and thus the rate of change in angle is preferably in the range of 0.5% or more and 50% or less, more preferably in the range of 1% or more and 30% or less, particularly preferably in the range of 1.5% or more and 20% or less in a case of adopting a TD stretching pattern of logarithmic form. As the stretching angle in the TD stretching pattern of logarithmic form is set in the above range, most of the stretching can be completed in the first half when the film stretching stress is low and the stretching stress applied during stretching can be reduced. As a result, breaking due to foreign substances can be suppressed.

Next, multistage stretching in TD will be described. Multistage stretching is a process of performing a two- or more stage stretching step compared to the usual one-stage stretching, and can lower the stretching stress applied during TD stretching. As a result, breaking due to foreign substances can be suppressed.

The TD multistage stretching is preferably two- or more stage stretching and five- or less stage stretching. Multistage stretching is preferable since it is possible to change the stretching temperature and the stretching stress for each stage stretching and to lower the stretching stress during TD stretching. As illustrated in Fig. 2, in multistage stretching, it is preferable to use a temperature pattern in which the temperature is lowered from first stage stretching to final stage stretching with a temperature difference of 2°C or more in each stage stretching.

The lower limit of the number of stretching stages is preferably two- or more stage stretching. When the stretching is two- or more stage stretching, the stretching stress can be reduced, so breaking due to foreign substances can be suppressed.

The upper limit of the number of stretching stages is preferably five stages or less. When the stretching is five- or less stage stretching, it is possible to prevent the equipment from becoming too large.

In a case of performing multistage stretching, a zone having a constant length can be appropriately provided after each stretching stage. As a zone having a constant length is provided after each stretching stage, the internal stress generated during stretching is relaxed in the constant length zone, the stretching stress during the next stretching can be further reduced, and breaking of the film can be suppressed.

The lower limit of the heat setting temperature is preferably 170°C, more preferably 180°C, particularly preferably 190°C. When the heat setting temperature is 170°C or more, the heat shrinkage rate can be decreased.

The upper limit of the heat setting temperature is preferably 230°C, more preferably 220°C, particularly preferably 210°C. When the heat setting temperature is 230°C or less, it is possible to suppress a decrease in mechanical strength due to the biaxially oriented polyester film becoming brittle.

The lower limit of the TD relaxation rate is preferably 0.5%, more preferably 1.0%, particularly preferably 2.0%. When the TD relaxation rate is 0.5% or more, the heat shrinkage rate in the TD direction can be kept low.

The upper limit of the TD relaxation rate is preferably 10%, more preferably 8%, particularly preferably 6%. When the TD relaxation rate is 10% or less, it is possible to prevent sagging and the like and to improve the flatness.

By adopting the above-mentioned preferable film forming conditions, it is possible to obtain a long film continuously without breaking in the formation of a biaxially oriented polyester film containing foreign substances and to satisfy the following preferable film properties.

[Configuration and properties of biaxially oriented polyester film]

The lower limit of the thickness of the biaxially oriented polyester film of the present invention is preferably 5 μm, more preferably 10 μm, particularly preferably 15 μm. As the thickness is set to 5μ or more, breaking due to foreign substances can be suppressed.

The upper limit of the thickness of the biaxially oriented polyester film of the present invention is preferably 100 um, more preferably 70 um, particularly preferably 40 μm.

The lower limit of the plane orientation coefficient (ΔP) of the biaxially oriented polyester film of the present invention is preferably 0.160, more preferably 0.161, particularly preferably 0.162. As the plane orientation coefficient (ΔP) is set to 0.160 or more, the mechanical strength can be kept sufficiently high.

The upper limit of ΔP of the biaxially oriented polyester film of the present invention is preferably 0.170, more preferably 0.169, particularly preferably 0.168. As the ΔP is set to 0.170 or less, stretching stress in the stretching step can be suppressed, and as a result, breaking due to foreign substances in the stretching step can be suppressed.

The lower limit of the breaking strength in the MD direction of the biaxially oriented polyester film of the present invention is preferably 180 MPa, more preferably 185 MPa, particularly preferably 190 MPa. When the breaking strength in the MD direction is 180 MPa or more, the mechanical strength when fabricated into a bag product is sufficient.

The upper limit of the breaking strength in the MD direction of the biaxially oriented polyester film of the present invention is 260 MPa, more preferably 255 MPa, particularly preferably 250 MPa. When the breaking strength in the MD direction is 260 MPa or less, breaking due to foreign substances in the stretching step can be substantially suppressed, and film formability is favorable.

The lower limit of the breaking elongation in the MD direction of the biaxially oriented polyester film of the present invention is preferably 80%, more preferably 90%, particularly preferably 100%. When the breaking elongation in the MD direction is 80% or more, breaking due to foreign substances in the stretching step can be substantially suppressed, and film formability is favorable.

The upper limit of the breaking elongation in the MD direction of the biaxially oriented polyester film of the present invention is 170%, more preferably 160%, particularly preferably 150%. When the breaking elongation in the MD direction is 170% or less, the mechanical strength when fabricated into a bag product is sufficient.

The lower limit of the heat shrinkage rate in the MD direction of the biaxially oriented polyester film of the present invention is preferably 0.5%, more preferably 0.8%, particularly preferably 1.1%. When the heat shrinkage rate in the MD direction is 0.5% or more, it is possible to prevent the film from becoming brittle and a decrease in mechanical strength.

The upper limit of the heat shrinkage rate in the MD direction of the biaxially oriented polyester film of the present invention is preferably 2.0%, more preferably 1.7%, particularly preferably 1.4%. When the heat shrinkage rate in the MD direction is 2.0% or less, breaking due to foreign substances in the stretching step can be substantially suppressed, and film formability is favorable.

The upper limit of the thickness unevenness per 800 mm in the transverse direction of the biaxially oriented polyester film roll of the present invention is preferably 18%, more preferably 16%, particularly preferably 14%. When the thickness unevenness is 18% or less, the winding quality when wound into a roll is favorable.

The number of foreign substances having a maximum length of 1.3 mm or more per 1000 $m^2$ of the biaxially oriented polyester film roll of the present invention is 1 or more. When there are one or more foreign substances having a maximum length of 1.3 mm or more per 1000 $m^2$, these foreign substances are likely to cause breaking during stretching and it is difficult to stably form the film under conventional film-forming conditions, but stable stretching is possible even if there are foreign substances as described above by performing stretching under the film forming conditions described in the present invention so that the heat shrinkage rate and degree of plane orientation of the film are in predetermined ranges.

Meanwhile, the lower limit of the number of foreign substances having a maximum length of 1.3 mm or more per 1000 $m^2$ of the biaxially oriented polyester film roll of the present invention is preferably 10 or less. When the number of foreign substances of 1.3 mm or more is as many as more than 10, the number of defects after printing increases, and this may decrease the yield of the secondary processing step.

The number of foreign substances having a maximum length of 1.0 mm or more per 8000 $m^2$ of the biaxially oriented polyester film roll of the present invention is 16 or more. In a case where there are 16 or more foreign substances having a maximum length of 1.0 mm or more per 8000 $m^2$, there are a large number of starting points of breaking in conventional films and it is difficult to continuously form long films, but it is possible to secure stable stretchability and to obtain a long film roll even if there are foreign substances as described above by performing stretching under the film forming conditions described in the present invention so that the heat shrinkage rate and degree of plane orientation of the film are in predetermined ranges.

Meanwhile, the upper limit of the number of foreign substances having a maximum length of 1.0 mm or more per 8000 $m^2$ of the biaxially oriented polyester film roll of the present invention is preferably 80 or less. When the number of foreign substances of 1.0 mm or more is as many as more than 80, the number of defects after printing increases, and this may decrease the yield of the secondary processing step.

A printed layer may be laminated on the biaxially oriented polyester film of the present invention. As the printing ink for forming the printed layer, aqueous and solvent-based resin-containing printing ink can be preferably used. Examples of the resin used in the printing ink here include an acrylic resin, a urethane-based resin, a polyester-based resin, a vinyl chloride-based resin, a vinyl acetate copolymer resin, and a mixture thereof. The printing ink may contain known additives such as an anti-static agent, a light blocking agent, an ultraviolet absorber, a plasticizer, a lubricating agent, a filler, a coloring agent, a stabilizer, a lubricant, a defoaming agent, a crosslinking agent, an anti-blocking agent, and an oxidation inhibitor.

The printing method for providing the printed layer is not particularly limited, and known printing methods such as an offset printing method, a gravure printing method, and a screen printing method can be used. In order to dry the solvent after printing, known drying methods such as hot air drying, hot roll drying, and infrared drying can be used.

The biaxially oriented polyester film of the present invention can be provided with a gas barrier layer such as an inorganic thin film layer or metal foil, as long as the objects of the present invention are not impaired.

In a case where an inorganic thin film layer is used as the gas barrier layer, the inorganic thin film layer is a thin film formed of a metal or an inorganic oxide. The material for forming the inorganic thin film layer is not particularly limited as long as the material can be formed into a thin film. From the viewpoint of gas barrier properties, preferable examples thereof include inorganic oxides such as silicon oxide (silica), aluminum oxide (alumina), and a mixture of silicon oxide and aluminum oxide. Particularly, a composite oxide of silicon oxide and aluminum oxide is preferable from the viewpoint of achieving both flexibility and denseness of the thin film layer.

In this composite oxide, with regard to the mixing ratio of silicon oxide to aluminum oxide, the metal mass ratio of Al is preferably in a range of 20% to 70%. Meanwhile, when the Al mass ratio is 70% or less, it is possible to soften the inorganic thin film layer and to prevent the film from being destroyed during secondary processing such as printing and lamination and the gas barrier property from decreasing. The silicon oxide used herein is various silicon oxides such as SiO and $SiO_2$ or a mixture thereof, and the aluminum oxide used herein is various aluminum oxides such as AlO and $Al_2O_3$ or a mixture thereof.

The thickness of the inorganic thin film layer is usually 1 to 100 nm, preferably 5 to 50 nm. When the thickness of the inorganic thin film layer is 1 nm or less, more satisfactory gas barrier properties are likely to be obtained. Meanwhile, when the thickness of the inorganic thin film layer is 100 nm or less, it is advantageous from the viewpoint of flex resistance and production cost.

The method for forming the inorganic thin film layer is not particularly limited, and known vapor deposition methods, for example, physical vapor deposition methods (PVD methods) such as a vacuum vapor deposition method, a sputtering method, and an ion plating method, or chemical vapor deposition methods (CVD methods) may be appropriately adopted. Hereinafter, a typical method for forming the inorganic thin film layer will be described by taking a silicon oxide-aluminum oxide based thin film as an example. For example, in the case of adopting the vacuum vapor deposition method, a mixture of $SiO_2$ and $Al_2O_3$, a mixture of $SiO_2$ and Al, or the like is preferably used as a vapor deposition raw material. Usually, particles are used as these vapor deposition raw materials. In this case, the size of each particle is desirably a size that does not change the pressure during vapor deposition, and the preferable particle size is 1 mm to 5 mm. For heating, systems such as resistive heating, high frequency induction heating, electron beam heating, and laser heating can be adopted. It is also possible to adopt reactive vapor deposition by introducing oxygen, nitrogen, hydrogen, argon, carbon dioxide gas, water vapor or the like as a reaction gas or using a means such as ozone addition or ion assist. The film forming conditions can also be arbitrarily changed so that a bias is applied to the body to be vapor-deposited (laminated film to be subjected to vapor deposition) or the body to be vapor-deposited is heated or cooled. The vapor deposition materials, the reaction gases, the application of a bias to the body to be vapor-deposited, the heating/cooling, and the like can be similarly changed even when a sputtering method and a CVD method are adopted. A printing layer may be laminated on the inorganic thin film layer.

In a case of providing an inorganic thin film layer on the biaxially oriented polyester film of the present invention, it is preferable to provide a protective layer on the inorganic thin film layer. The gas barrier layer formed of a metal oxide is not a completely dense film and has dotted microscopic deficient moieties. By applying a specific resin composition for protective layer to be described later onto the metal oxide layer to form a protective layer, a resin in the resin composition for protective layer invades the deficient moieties of the metal oxide layer, and as a result, an effect of stabilizing the gas barrier properties is obtained. Additionally, by using a material exhibiting gas barrier properties in the protective layer itself as well, the gas barrier performance of the laminated film can also be greatly improved.

Examples of the protective layer include protective layers obtained by adding curing agents such as epoxy-based curing agents, isocyanate-based curing agents, and melamine-based curing agents to resins such as urethane-based resins, polyester-based resins, acrylic resins, titanium-based resins, isocyanate-based resins, imine-based resins, and polybutadiene-based resins. Examples of the solvating medium (solvent) used for forming the protective layer include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

Layers of other materials may be laminated on the biaxially oriented polyester film of the present invention. As the lamination method, a method in which the layer formed of another material is bonded to the biaxially oriented polyester film after film fabrication or a method in which the layer formed of another material is bonded to the biaxially oriented polyester film during film formation.

The biaxially oriented polyester film of the present invention can be used as a packaging material by, for example, forming a heat-sealable resin layer called a sealant (also referred to as a sealant layer) on the biaxially oriented polyester film. The sealant layer is usually formed by an extrusion lamination method or a dry lamination method. As the thermoplastic copolymer that forms the heat-sealable resin layer, any one may be used as long as the adhesive properties of the sealant can be sufficiently exerted. Polyethylene resins such as HDPE, LDPE or LLDPE, a polypropylene resin, an ethylene-vinyl acetate copolymer, an ethylene-$\alpha$-olefin random copolymer, an ionomer resin, and the like can be used.

The sealant layer may be a single-layer film or a multilayer film, and may be selected depending on the required function. For example, from the viewpoint of imparting moisture resistance, a multilayer film in which a resin such as an ethylene-cyclic olefin copolymer or polymethylpentene is interposed can be used. In the sealant layer, various additives such as a flame retardant, a slipping agent, an anti-blocking agent, an oxidation inhibitor, a light stabilizer, and a tackifier may be blended.

The thickness of the sealant layer is preferably 10 to 100 $\mu$m, more preferably 20 to 60 $\mu$m.

The lower limit of the roll width of the polyester film roll of the present invention is preferably 400 mm or more, and from the viewpoint of improving the productivity in the secondary processing step, is more preferably 1000 mm or more, still more preferably 1500 mm or more.

Meanwhile, the upper limit of the polyester film roll width of the present invention is preferably 3000 mm or less, more preferably 2500 mm or less. When the width of the polyester film roll exceeds 3,000 mm, it is difficult to handle the roll as well as the film is likely to wrinkle by roll deflection.

The lower limit of the winding length of the polyester film roll of the present invention is preferably 1000 m or more, and from the viewpoint of productivity in the secondary processing step, is more preferably 2000 m or more, still more preferably 4000 m or more.

Meanwhile, the lower limit of the winding length of the polyester film roll of the present invention is 100,000 m, preferably 80,000 m, more preferably 70,000 m.

When the winding length of the polyester film roll exceeds 100,000 m, the weight of the roll increases and it is difficult to handle the roll.

In the polyester film roll of the present invention, a paper tube, a plastic core, a metal core, and the like are preferably used as the core for winding the film, and the core can be selected as appropriate depending on the purpose.

After the film has been removed from the polyester film roll of the present invention, the difference in gap in the transverse direction of the core is preferably 0.5 mm or less. In particular, in a case where a paper tube is used as the core, when the film is stored after being wound, the paper tube is deformed (distorted) by distortion, natural shrinkage and the like of the film. At this time, it is not preferable that the difference in distortion of the paper tube in the transverse direction (difference in gap in the transverse direction) is large since wrinkling occurs on the core side of the film roll. Hence, the difference in gap in the paper tube after the film has been removed from the film roll is preferably 0.4 mm or less, more preferably 0.3 mm or less.

In a case of using a paper tube as the core of the polyester film roll of the present invention, the flat compressive strength of the paper tube as the core after the film has been removed from the film roll is preferably 1700 N/100 mm or more. It is not preferable that the compressive strength is lower than 1700 N/100 mm since the internal stress applied after the film has been wound distorts the paper tube and causes wrinkling in the roll core portion. The compressive strength is preferably 1800 N/100 mm or more, more preferably 1900 N/100 mm or more. It is more preferable as the compressive strength is higher. Examples of the means to obtain a high flat compressive strength of the paper tube include a method in which the thickness of the paper tube is increased and a method in which a hard paper tube or a super-hard paper tube designed to have high strength is used.

In the heat-shrinkable polyester film roll of the present invention, in order to set the difference in gap in the paper tube after the film has been removed from the film roll to 0.5 mm or less as described above, it is preferable to set the difference in gap in the transverse direction of the paper tube before the film is wound used for winding to 0.3 mm or less. It is not preferable that the difference in distortion in the transverse direction of the paper tube is 0.4 mm or more since the distorted position becomes the oblique direction when the film is wound and wrinkling (core wrinkling) is likely to occur. The difference in gap in the transverse direction of the paper tube is more preferably 0.2 mm or less, still more preferably 0.1 mm or less. Examples of the means to reduce the difference in gap in the paper tube include a method in which a paper tube is used which has a high hardness and is hardly deformed by vibrations during transportation such as conveyance, a method in which the paper tube is stored in a moisture barrier bag until use so that the paper tube is not deformed by moisture absorption, and a method in which the paper tube is stored in a room maintained at a constant temperature and a constant humidity so that the paper tube is not deformed by moisture absorption.

The average value of the winding hardness in the transverse direction of the polyester film roll surface layer of the present invention is preferably 500 or more and 850 or less. It is not preferable that the average value of the winding hardness is less than 500 since misalignment occurs on the end face of the film roll although the winding state is soft and the core wrinkling is improved. It is not preferable that the winding hardness is higher than 850 since the winding state is hard and wrinkling due to thickness unevenness is likely to occur. The average value of the winding hardness in the transverse direction of the film roll surface layer is preferably 550 or more and 800 or less, more preferably 600 or more and 750 or less. The average value of the winding hardness is particularly preferably more than 650 and 750 or less.

EXAMPLES

Next, the present invention will be described in more detail by way of Examples, but the present invention is not limited to the following examples.

[Back-pressure increase coefficient of recycled raw material]

The recycled raw material pellets were dried at 135°C for 12 hours and then extruded at a temperature of 285°C, a filter filtration diameter of 20 $\mu$m, a discharge rate of 6 g/min, and a discharge time of 4 hours, and the filter back-pressure increase coefficient was determined by the following equation.

$$K = \Delta P / (Q/S)$$

Here, K: filter back-pressure increase coefficient,

$$\Delta P = P1 - P0$$

P1: pressure after 4 hours of extrusion (MPa), PC: pressure at the start of extrusion (MPa), Q: discharge rate during extrusion (kg/hr), and S: filter filtration area (cm$^2$)

[Thickness of biaxially-oriented film]

The film thickness was measured using a dial gauge in conformity with JIS K7130-1999 method A.

[Heat shrinkage rate of biaxially-oriented film]

The heat shrinkage rate was measured by the dimensional change testing method in conformity with JIS-C-2318, except that the test temperature was set to 150°C and the heating time to 15 minutes.

[Refractive index of biaxially-oriented film]

A sample measuring 5 mm in length × 5 mm in width was cut out from the center position in the transverse direction of the film.
In conformity with the JIS K 7142-1996 A method, the refractive index (Nx) in the machine direction of the film, the refractive index (Ny) in the transverse direction, and the refractive index (Nz) in the thickness direction were measured for the sample using sodium D-ray as a light source, diiodomethane as a contact liquid, and an Abbe refractometer (NAR-1T manufactured by ATAGO CO., LTD.). The plane orientation coefficient (ΔP) was calculated by the following equation.

Plane orientation coefficient (ΔP) = [(Nx + Ny) / 2] - Nz

[Strength elongation of biaxially-oriented film]

In conformity with JIS K 7127, a test sample having a width of 15 mm and a length of 100 mm was cut out in the machine direction of the film. The test sample was subjected to a tensile test using a tensile testing machine (Autograph AG-I manufactured by Shimadzu Corporation) under conditions of a gauge length of 50 mm and a tension speed of 200 mm/min. The breaking strength and breaking elongation of the test sample were calculated from the obtained stress-strain curve.

[Evaluation of film formability of biaxially-oriented film]

When the films of the respective Examples and Comparative Examples were formed, a case where continuous film formation was possible by 10,000 m without breaking was evaluated as ○ and a case where continuous film formation was not possible by 10,000 m due to breaking was evaluated as ×.

[Evaluation of foreign substance in biaxially-oriented film (1000 square meters)]

A wound film roll having a width of 800 mm and a winding length of 1250 m (1000 square meters) was rewound using a rewinder. When rewinding was performed, the number of defects was investigated using a defect detector (F MAX MR manufactured by FUTEC Inc.). The number of defects having a longest defect portion size of 1.3 mm or more was determined.

Less than one defect of 1.3 mm or more: C
One or more and ten or less defects of 1.3 mm or more: A

[Evaluation of foreign substance in biaxially-oriented film (8000 square meters)]

A wound film roll having a width of 800 mm and a winding length of 10000 m (8000 square meters) was rewound using a rewinder. When rewinding was performed, the number of defects was investigated using a defect detector (F MAX MR manufactured by FUTEC Inc.). The number of defects having a longest defect portion size of 1.0 mm or more was determined.

15 or less defects of 1.0 mm or more: C

16 or more and 80 or less defects of 1.0 mm or more: A

[Evaluation of thickness unevenness in transverse direction]

A sample of 800 mm in the transverse direction and 40 mm in the machine direction was sampled from the film roll, and the thickness in the transverse direction was continuously measured at 5 m/sec using a film tester continuous thickness measuring device (manufactured by Fujiwork Co., Ltd.). The maximum thickness at the time of measurement was taken as Tmax., the minimum thickness as Tmin., and the average thickness as Tave., and the thickness unevenness in the transverse direction of the film was calculated by the equation below.

Thickness unevenness = {(Tmax. - Tmin.) / Tave.} $\times$ 100 (%)

[Evaluation of filter clogging]

When the films of the respective Examples and Comparative Examples were formed, a case where the film could be formed continuously for one week without replacing the filter was evaluated as ○ and a case where filter clogging occurred in less than one week and it was difficult to continuously form the film was evaluated as ×.

(Polyester A: mechanically recycled polyester resin derived from PET container)

Foreign substances such as content residue were washed away from the PET containers, and then the PET containers were pulverized to obtain flakes. The obtained flakes were washed with a 3.5% by weight solution of sodium hydroxide at a flake concentration of 10% by weight and 85°C for 30 minutes under stirring. After washing with alkaline, the flakes were taken out and washed with distilled water at a flake concentration of 10% by weight. at 25°C for 20 minutes under stirring. The distilled water was replaced, and this washing with water was repeated 2 times more. After washing with water, the flakes were dried, and then 0.10 parts by mass of silica particles having an average particle diameter of 2.5 um were added to the flakes. Thereafter, the flakes were melted using an extruder, finer foreign substances were filtered out 2 times more by changing the filter to one having a smaller opening size in order, and finer foreign substances were filtered out using a filter having the smallest opening size of 50 um on the third time to obtain polyester A. The back-pressure increase coefficient of polyester A was 96 MPa/kg·cm$^2$.

(Polyester B: mechanically recycled polyester resin derived from PET container)

Polyester B was obtained in the same manner as polyester A. The back-pressure increase coefficient of polyester B was 64 MPa/kg·cm$^2$.

(Polyester C: mechanically recycled polyester resin derived from PET container)

Polyester C was obtained in the same manner as polyester A. The back-pressure increase coefficient of polyester C was 32 MPa/kg·cm$^2$.

(Polyester D: mechanically recycled polyester resin derived from PET container)

Polyester D was obtained in the same manner as polyester A. The back-pressure increase coefficient of polyester D was 10 MPa/kg·cm$^2$.

(Polyester E: mechanically recycled polyester resin derived from PET container)

Polyester E was obtained in the same manner as polyester A, except that only clean PET containers sorted out were used. The back-pressure increase coefficient of polyester E was 8 MPa/kg·cm$^2$.

(Polyester F: mechanically recycled polyester resin derived from PET container)

Polyester F was obtained in the same manner as polyester A. The back-pressure increase coefficient of polyester F was 105 MPa/kg·cm$^2$.

(Polyester G: chemically recycled polyester resin derived from PET container)

The following method was used to synthesize chemically recycled polyester resin reconstituted from PET bottles that was used to fabricate biaxially oriented polyester film as described below.

A bale of PET bottles that had been separated, collected, and collected were fed into a wet grinder, pulverization was carried out while 1,000 liters of water to which 500 g of liquid kitchen detergent had been added was made to circulate within the foregoing wet grinder, a specific gravity separator connected to the grinder was used to cause sedimentation of metal, sand, glass, and other such substances of high specific gravity, and flakes were extracted from the fraction at the upper layer thereof. These flakes were washed with pure water and made to undergo centrifugal dewatering to produce collected flakes.

30 kg of the foregoing collected flakes that had been melted while in an undried state were loaded into an autoclave equipped with an agitator and in which there was a liquid mixture of 150 g of zinc acetate dihydrate and 150 kg of ethylene glycol that had been preheated, and following removal of the fractions of boiling point lower than ethylene glycol such as acetic acid and water, a reflux condenser was used to react this for 4 hours at a temperature of 195°C to 200°C.

Following completion of the reaction, the temperature of the contents of the reaction vessel was reduced to 97°C to 98°C, and a filter was used to carry out hot filtration to remove suspended matter and sediment.

Following hot filtration, the filtrate was further cooled, and after confirming that the crude BHET was completely dissolved, prepurification treatment was performed by causing this to pass through an activated carbon bed and then through an anion/cation exchange mixed bed for 30 minutes at 50°C to 51°C.

The prepurification-treated solution was again loaded into an agitating-type autoclave, and heated to distill the excess ethylene glycol therefrom at normal pressure and 198°C to obtain a concentrated BHET melt.

The concentrated BHET melt that was obtained was allowed to cool naturally while being agitated in a nitrogen gas atmosphere, and this was thereafter removed from the autoclave to obtain a concentrated BHET chip block.

This chip block was again heated to 130°C and melted, following which this was supplied by means of a metering pump to a thin film vacuum evaporator, where evaporation and cold condensation were carried out to obtain purified BHET.

Melt polymerization was performed using this purified BHET as a raw material to obtain chemically recycled polyester resin G having an intrinsic viscosity of 0.696 dl/g. The back-pressure increase coefficient of polyester G was 7 MPa/kg·cm$^2$.

[Example 1]

The polyester A was charged into an extruder. After the resin was melted at 280°C in the extruder, the molten resin was allowed to pass through a 50 um filter mesh and then through a 100 $\mu$m filter mesh. The molten resin was then cast from a T-die at 280°C and brought into close contact with a cooling roll at 10°C by an electrostatic adhesion method to obtain an un-stretched sheet.

Next, the obtained un-stretched sheet was stretched 3.6 times in the MD direction at a temperature of 115°C. The film immediately after longitudinal stretching was allowed to pass through a heating furnace set at 95°C using a hot air heater, and subjected to 3% relaxation treatment in the machine direction using the speed difference between the rolls at the entrance and exit of the heating furnace. The film was then allowed to pass through a tenter and stretched 4.6 times in the TD direction at 120°C, and subjected to heat setting treatment at 210°C for 3 seconds and 5% relaxation treatment for 1 second to obtain a biaxially oriented polyester film having a thickness of 12 um. The resin composition and film forming conditions of the biaxially oriented polyester film are presented in Table 1. The physical properties and evaluation results of the obtained film are also presented in Table 1.

[Example 2]

A biaxially oriented polyester film having a thickness of 12 $\mu$m was obtained by forming a film in the same manner as in Example 1, except that the relaxation rate immediately after longitudinal stretching was changed to 0%, the stretching method in the tenter was changed to three-stage stretching, and a constant length region of 1 m was provided between the first and second stages and the second and third stages. The physical properties and evaluation results are presented in Table 1.

[Example 3]

A biaxially oriented polyester film having a thickness of 12 um was obtained by forming a film in the same manner as in Example 1, except that the relaxation rate immediately after longitudinal stretching was changed to 0% and the stretching pattern in the tenter was changed to a logarithmic form. The stretching angle in the tenter was adjusted so that the first stage refraction angle θ1: 12.6°, the second stage refraction angle θ2: 8.2°, and the angle change rate was 34.9%, and the total stretching ratio was set to be the same stretching ratio as in Example 1. The physical properties and evaluation results are presented in Table 1.

[Example 4]

A biaxially oriented polyester film having a thickness of 12 um was obtained by forming a film in the same manner as in Example 1, except that the relaxation rate immediately after longitudinal stretching was changed to 1%. The physical properties and evaluation results are presented in Table 1.

[Example 5]

A biaxially oriented polyester film having a thickness of 12 $\mu$m was obtained by forming a film in the same manner as in Example 1, except that the relaxation rate immediately after longitudinal stretching was changed to 10%. The physical properties and evaluation results are presented in Table 1.

[Example 6]

A biaxially oriented polyester film having a thickness of 12 $\mu$m was obtained by forming a film in the same manner as in Example 1, except that the longitudinal stretching ratio was changed to 3.9 times. The physical properties and evaluation results are presented in Table 1.

[Example 7]

A biaxially oriented polyester film having a thickness of 12 um was obtained by forming a film in the same manner as in Example 1, except that the longitudinal stretching ratio was changed to 2.6 times. The physical properties and evaluation results are presented in Table 1.

[Example 8]

A biaxially oriented polyester film having a thickness of 12 um was obtained by forming a film in the same manner as in Example 1, except that the lateral stretching ratio was changed to 4.9 times. The physical properties and evaluation results are presented in Table 1.

[Example 9]

A biaxially oriented polyester film having a thickness of 12 $\mu$m was obtained by forming a film in the same manner as in Example 1, except that the lateral stretching ratio was changed to 2.6 times. The physical properties and evaluation results are presented in Table 1.

[Example 10]

A biaxially oriented polyester film having a thickness of 12 um was obtained by forming a film in the same manner as in Example 1, except that the resin was changed the polyester B. The physical properties and evaluation results are presented in Table 1.

[Example 11]

A biaxially oriented polyester film having a thickness of 12 $\mu$m was obtained by forming a film in the same manner as in Example 1, except that the resin was changed the polyester C. The physical properties and evaluation results are presented in Table 1.

[Example 12]

A biaxially oriented polyester film having a thickness of 12 $\mu$m was obtained by forming a film in the same manner as in Example 1, except that the resin was changed the polyester D. The physical properties and evaluation results are presented in Table 1.

[Example 13]

A biaxially oriented polyester film having a thickness of 12 um was obtained by forming a film in the same manner as in Example 1, except that the resin was changed the polyester G. The physical properties and evaluation results are presented in Table 1.

[Comparative Example 1]

A biaxially oriented polyester film having a thickness of 12 $\mu$m was obtained by forming a film in the same manner as in Example 1, except that the filter mesh through which the molten resin passed was changed to 20 um and 50 um and the relaxation rate immediately after longitudinal stretching was changed to 0%. Clogging of the filter mesh occurred, and the film formability was poor.

[Comparative Example 2]

A biaxially oriented polyester film having a thickness of 12 um was obtained by forming a film in the same manner as in Example 1, except that the filter mesh through which the molten resin passed was changed to 20 $\mu$m and 50 um, the resin was changed the polyester D, and the relaxation rate immediately after longitudinal stretching was changed to 0%. Clogging of the filter mesh occurred, and the film formability was poor.

[Comparative Example 3]

A biaxially oriented polyester film having a thickness of 12 $\mu$m was obtained by forming a film in the same manner as in Example 1, except that the resin was changed the polyester E and the relaxation rate immediately after longitudinal stretching was changed to 0%. The obtained biaxially oriented polyester film had few foreign substances, and clogging of the filter mesh did not occur, but the effect of environment countermeasure was not sufficient since clean PET containers were sorted out and regenerated into a recycled raw material.

[Comparative Example 4]

A biaxially oriented polyester film having a thickness of 12 $\mu$m was obtained by forming a film in the same manner as in Example 1, except that the resin was changed to polyester F and the relaxation rate immediately after longitudinal stretching was changed to 10%. Breaking due to foreign substances often occurred in the obtained biaxially oriented polyester film, and the film formability was poor.

[Comparative Example 5]

A biaxially oriented polyester film having a thickness of 12 um was obtained by forming a film in the same manner as in Example 1, except that the relaxation rate immediately after longitudinal stretching was changed to 12%. The obtained biaxially oriented polyester film had a low plane orientation coefficient and poor mechanical strength.

[Comparative Example 6]

A biaxially oriented polyester film having a thickness of 12 $\mu$m was obtained by forming a film in the same manner as in Example 1, except that the relaxation rate immediately after longitudinal stretching was changed to 0%. The obtained biaxially oriented polyester film had a low plane orientation coefficient and poor mechanical strength. Breaking due to foreign substances often occurred in the obtained biaxially oriented polyester film, and the film formability was poor.

[Comparative Example 7]

A biaxially oriented polyester film having a thickness of 12 um was obtained by forming a film in the same manner as in Example 1, except that the longitudinal stretching ratio was changed to 4.1 times. Breaking due to foreign substances often occurred in the obtained biaxially oriented polyester film, and the film formability was poor.

[Comparative Example 8]

A biaxially oriented polyester film having a thickness of 12 um was obtained by forming a film in the same manner as in Example 1, except that the longitudinal stretching ratio was changed to 2.3 times. The obtained biaxially oriented polyester film had a low plane orientation coefficient and poor mechanical strength.

[Comparative Example 9]

A biaxially oriented polyester film having a thickness of 12 um was obtained by forming a film in the same manner as in Example 1, except that the lateral stretching ratio was changed to 5.1 times. Breaking due to foreign substances often occurred in the obtained biaxially oriented polyester film, and the film formability was poor.

[Comparative Example 10]

A biaxially oriented polyester film having a thickness of 12 $\mu$m was obtained by forming a film in the same manner as in Example 1, except that the lateral stretching ratio was changed to 2.3 times. The obtained biaxially oriented polyester film had a low plane orientation coefficient and poor mechanical strength.

[Table 1A]

| | | | | Example 1 | Example 2 | Example 3 | Example 4 | Example 5 | Example 6 |
|---|---|---|---|---|---|---|---|---|---|
| Film forming conditions of biaxially stretched film | Resin | | | Polyester A | Polyester A | Polyester A | Polyester A | Polyester A | Polyester A |
| | Melt extrusion step | Filter mesh size | 1st location | μm | 50 | 50 | 50 | 50 | 50 | 50 |
| | | | 2nd location | | 100 | 100 | 100 | 100 | 100 | 100 |
| | MD stretching step | Stretching ratio | - | Times | 3.6 | 3.6 | 3.6 | 3.6 | 3.6 | 3.9 |
| | | Stretching temperature | - | °C | 115 | 115 | 115 | 115 | 115 | 115 |
| | | Relaxation rate | - | % | 3 | 0 | 0 | 1 | 10 | 3 |
| | TD stretching step | Stretching ratio | 1st stage | Times | 4.6 | 1.5 | 4.6 | 4.6 | 4.6 | 4.6 |
| | | | 2nd stage | | | 1.5 | | | | |
| | | | 3rd stage | | | 1.6 | | | | |
| | | Stretching temperature | 1st stage | Times | 120 | 125 | 120 | 120 | 120 | 120 |
| | | | 2nd stage | | | 120 | | | | |
| | | | 3rd stage | | | 115 | | | | |
| | | Stretching pattern | - | - | Straight line | Multistage stretching | Logarithmic form | Straight line | Straight line | Straight line |
| | | Heat setting temperature | - | °C | 210 | 210 | 210 | 210 | 210 | 210 |

(continued)

| | | | | Example 1 | Example 2 | Example 3 | Example 4 | Example 5 | Example 6 |
|---|---|---|---|---|---|---|---|---|---|
| Properties of biaxially stretched film | Thickness | - | μm | 12 | 12 | 12 | 12 | 12 | 12 |
| | Breaking strength | MD | MPa | 232 | 229 | 228 | 245 | 200 | 258 |
| | Breaking elongation | MD | % | 130 | 135 | 134 | 110 | 159 | 84 |
| | Heat shrinkage rate | MD | % | 1.2 | 1.3 | 1.2 | 1.7 | 0.8 | 2.0 |
| | $\Delta P$ | - | - | 0.165 | 0.165 | 0.164 | 0.166 | 0.160 | 0.170 |
| | Thickness unevenness | - | % | 6.1 | 4.5 | 4.0 | 5.3 | 17.1 | 5.1 |
| | Film formability | - | - | ○ | ○ | ○ | ○ | ○ | ○ |
| | Number of foreign substances | per 1000 m2 | - | A | A | A | A | A | A |
| | Number of foreign substances | per 8000 m2 | - | A | A | A | A | A | A |
| | Filter clogging | - | - | ○ | ○ | O | ○ | ○ | ○ |

[Table 1B]

| | | | | | Example 7 | Example 8 | Example 9 | Example 10 | Example 11 | Example 12 |
|---|---|---|---|---|---|---|---|---|---|---|
| | | Resin | | | Polyester A | Polyester A | Polyester A | Polyester B | Polyester C | Polyester D |
| Film forming conditions of biaxially stretched film | Melt extrusion step | Filter mesh size | 1st location | μm | 50 | 50 | 50 | 50 | 50 | 50 |
| | | | 2nd location | | 100 | 100 | 100 | 100 | 100 | 100 |
| | MD stretching step | Stretching ratio | - | Times | 2.6 | 3.6 | 3.6 | 3.6 | 3.6 | 3.6 |
| | | Stretching temperature | - | °C | 115 | 115 | 115 | 115 | 115 | 115 |
| | | Relaxation rate | - | % | 3 | 3 | 3 | 3 | 3 | 3 |
| | TD stretching step | Stretching ratio | 1st stage | Times | 4.6 | 4.9 | 2.6 | 4.6 | 4.6 | 4.6 |
| | | | 2nd stage | | | | | | | |
| | | | 3rd stage | | | | | | | |
| | | Stretching temperature | 1st stage | Times | 120 | 120 | 120 | 120 | 120 | 120 |
| | | | 2nd stage | | | | | | | |
| | | | 3rd stage | | | | | | | |
| | | Stretching pattern | - | - | Straight line | Straight line | Straight line | Straight line | Straight line | Straight line |
| | | Heat setting temperature | - | °C | 210 | 210 | 210 | 210 | 210 | 210 |
| Properties of biaxially stretched film | Thickness | | - | μm | 12 | 12 | 12 | 12 | 12 | 12 |
| | Breaking strength | | MD | MPa | 184 | 230 | 229 | 233 | 232 | 222 |
| | Breaking elongation | | MD | % | 168 | 129 | 134 | 129 | 128 | 129 |
| | Heat shrinkage rate | | MD | % | 0.5 | 1.5 | 0.9 | 1.1 | 1.1 | 1.1 |
| | ΔP | | - | - | 0.161 | 0.170 | 0.160 | 0.164 | 0.165 | 0.164 |
| | Thickness unevenness | | - | % | 13.7 | 4.7 | 14.1 | 5.9 | 5.6 | 5.5 |
| | Film formability | | - | - | ○ | ○ | ○ | ○ | ○ | ○ |
| | Number of foreign substances | | per 1000 m$^2$ | - | A | A | A | A | A | A |
| | Number of foreign substances | | per 8000 m$^2$ | - | A | A | A | A | A | A |
| | Filter clogging | | - | - | ○ | ○ | ○ | ○ | ○ | ○ |

[Table 1C]

| | | | | | Example 13 | Comparative Example 1 | Comparative Example 2 | Comparative Example 3 | Comparative Example 4 | Comparative Example 5 |
|---|---|---|---|---|---|---|---|---|---|---|
| Film forming conditions of biaxially stretched film | | Resin | | | Polyester G | Polyester A | Polyester D | Polyester E | Polyester F | Polyester A |
| | Melt extrusion step | Filter mesh size | 1st location | μm | 50 | 20 | 20 | 50 | 50 | 50 |
| | | | 2nd location | | 100 | 50 | 50 | 100 | 100 | 100 |
| | MD stretching step | Stretching ratio | - | Times | 3.6 | 3.6 | 3.6 | 3.6 | 3.6 | 3.6 |
| | | Stretching temperature | - | °C | 115 | 115 | 115 | 115 | 115 | 115 |
| | | Relaxation rate | - | % | 3 | 0 | 0 | 0 | 10 | 12 |
| | TD stretching step | Stretching ratio | 1st stage | Times | 4.6 | 4.6 | 4.6 | 4.6 | 4.6 | 4.6 |
| | | | 2nd stage | | | | | | | |
| | | | 3rd stage | | | | | | | |
| | | Stretching temperature | 1st stage | Times | 120 | 120 | 120 | 120 | 120 | 120 |
| | | | 2nd stage | | | | | | | |
| | | | 3rd stage | | | | | | | |
| | | Stretching pattern | - | - | Straight line | Straight line | Straight line | Straight line | Straight line | Straight line |
| | | Heat setting temperature | - | °C | 210 | 210 | 210 | 210 | 210 | 210 |

(continued)

| | | | | Example 13 | Comparative Example 1 | Comparative Example 2 | Comparative Example 3 | Comparative Example 4 | Comparative Example 5 |
|---|---|---|---|---|---|---|---|---|---|
| Properties of biaxially stretched film | Thickness | - | μm | 12 | 12 | 12 | 12 | 12 | 12 |
| | Breaking strength | MD | MPa | 223 | 259 | 255 | 256 | 201 | 190 |
| | Breaking elongation | MD | % | 130 | 100 | 98 | 99 | 160 | 171 |
| | Heat shrinkage rate | MD | % | 1.0 | 2.1 | 2.2 | 2.2 | 0.9 | 0.4 |
| | $\Delta P$ | - | - | 0.165 | 0.171 | 0.173 | 0.171 | 0.160 | 0.158 |
| | Thickness unevenness | - | % | 5.4 | 4.1 | 3.9 | 4.1 | 15.5 | 18.3 |
| | Film formability | - | - | ○ | ○ | ○ | ○ | × | ○ |
| | Number of foreign substances | per 1000 m$^2$ | - | A | C | C | C | A | A |
| | Number of foreign substances | per 8000 m$^2$ | - | A | C | C | C | A | A |
| | Filter clogging | - | - | ○ | × | × | ○ | ○ | ○ |

[Table 1D]

| | | | | Comparative Example 6 | Comparative Example 7 | Comparative Example 8 | Comparative Example 9 | Comparative Example 10 |
|---|---|---|---|---|---|---|---|---|
| Film forming conditions of biaxially stretched film | | Resin | | Polyester A | Polyester A | Polyester A | Polyester A | Polyester A |
| | Melt extrusion step | Filter mesh size | 1st location | μm | 50 | 50 | 50 | 50 | 50 |
| | | | 2nd location | | 100 | 100 | 100 | 100 | 100 |
| | MD stretching step | Stretching ratio | - | Times | 3.6 | 4.1 | 2.3 | 3.6 | 3.6 |
| | | Stretching temperature | - | °C | 115 | 115 | 115 | 115 | 115 |
| | | Relaxation rate | - | % | 0 | 3 | 3 | 3 | 3 |
| | TD stretching step | Stretching ratio | 1st stage | Times | 4.6 | 4.6 | 4.6 | 5.1 | 2.3 |
| | | | 2nd stage | | | | | | |
| | | | 3rd stage | | | | | | |
| | | Stretching temperature | 1st stage | Times | 120 | 120 | 120 | 120 | 120 |
| | | | 2nd stage | | | | | | |
| | | | 3rd stage | | | | | | |
| | | Stretching pattern | - | - | Straight line | Straight line | Straight line | Straight line | Straight line |
| | | Heat setting temperature | - | °C | 210 | 210 | 210 | 210 | 210 |

(continued)

| | | | Comparative Example 6 | Comparative Example 7 | Comparative Example 8 | Comparative Example 9 | Comparative Example 10 |
|---|---|---|---|---|---|---|---|
| Properties of biaxially stretched film | Thickness | μm | - | 12 | 12 | 12 | 12 | 12 |
| | Breaking strength | MPa | MD | 261 | 271 | 175 | 225 | 226 |
| | Breaking elongation | % | MD | 90 | 71 | 175 | 134 | 128 |
| | Heat shrinkage rate | % | MD | 2.1 | 2.5 | 0.3 | 1.1 | 1.1 |
| | ΔP | - | - | 0.171 | 0.172 | 0.155 | 0.174 | 0.159 |
| | Thickness unevenness | % | - | 3.8 | 4.1 | 16.9 | 4.8 | 18.1 |
| | Film formability | - | - | × | × | ○ | × | ○ |
| | Number of foreign substances | - | per 1000 m² | A | A | A | A | A |
| | Number of foreign substances | - | per 8000 m² | A | A | A | A | A |
| | Filter clogging | - | - | ○ | ○ | ○ | ○ | ○ |

INDUSTRIAL APPLICABILITY

The biaxially oriented polyester film roll of the present invention is expected to greatly contribute to industry since the productivity of the obtained film is favorable and a long film can be obtained although the recycled raw material contains a large amount of foreign substances, the film roll can be widely applied in the field of packaging films such as food packaging, and there is a strong desire to reduce environmental impact these days.

**Claims**

1. A biaxially-oriented polyethylene terephthalate film roll obtained by winding a biaxially-oriented polyethylene terephthalate film that is fabricated using a recycled raw material derived from a PET container and satisfies the following (1) to (3) into a roll:

    (1) a heat shrinkage rate in a machine direction of the film is 0.5% or more and 2.0% or less when measured at 150°C for 30 minutes;
    (2) a plane orientation coefficient ($\Delta P$) of the film is 0.16 or more and 0.17 or less as calculated from a refractive index measured based on JIS K 7142-1996 A method; and
    (3) a number of foreign substances having a maximum length of 1.3 mm or more per 1000 $m^2$ of the film roll is 1 or more.

2. The biaxially-oriented polyethylene terephthalate film roll according to claim 1, wherein the recycled raw material derived from a PET container according to claim 1 is a mechanically recycled polyester resin and/or a chemically recycled polyester resin.

3. The biaxially-oriented polyethylene terephthalate film roll according to claim 1 or 2, wherein thickness unevenness per 800 mm in a transverse direction of the film is 18% or less.

4. The biaxially-oriented polyethylene terephthalate film roll according to any one of claims 1 to 3, wherein breaking strength in a machine direction of the film is 180 MPa or more and 260 MPa or less and a breaking elongation is 80% or more and 170% or less.

5. The biaxially-oriented polyethylene terephthalate film roll according to any one of claims 1 to 4, wherein a number of foreign substances having a maximum length of 1.0 mm or more per 8000 $m^2$ of the film roll is 16 or more.

6. The biaxially-oriented polyethylene terephthalate film roll according to any one of claims 1 to 5, having a winding length of 10,000 m or more.

Fig.1

Fig.2

| 1 | PREHEATING ZONE |
| 2 | TD PATTERN OF STRAIGHT LINE FORM |
| 3 | STRETCHING ZONE |
| 4 | HEAT SETTING ZONE |
| 5 | STRETCHING 1 ZONE |
| 6 | STRETCHING 2 ZONE |

## INTERNATIONAL SEARCH REPORT

| International application No. |
|---|
| **PCT/JP2022/030148** |

### A. CLASSIFICATION OF SUBJECT MATTER

*C08J 5/18*(2006.01)i
FI:   C08J5/18 CFD

According to International Patent Classification (IPC) or to both national classification and IPC

### B. FIELDS SEARCHED

Minimum documentation searched (classification system followed by classification symbols)

C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/159649 A1 (TOYOBO CO., LTD.) 07 September 2018 (2018-09-07) comparative examples 1-2 | 1-5 |
| Y | claims, examples 1-8 | 1-3, 5-6 |
| Y | JP 2020-12087 A (TOYOBO CO., LTD.) 23 January 2020 (2020-01-23) claim 2, paragraph [0041] | 1-3, 5-6 |
| Y | JP 2014-65282 A (TOYOBO CO., LTD.) 17 April 2014 (2014-04-17) claims, paragraph [0125], examples 1-7 | 1-3, 5-6 |
| Y | WO 2020/170819 A1 (TOYOBO CO., LTD.) 27 August 2020 (2020-08-27) paragraph [0070] | 6 |
| A | WO 2018/159648 A1 (TOYOBO CO., LTD.) 07 September 2018 (2018-09-07) entire text, all drawings | 1-6 |
| A | JP 2012-220879 A (TOYO BOSEKI) 12 November 2012 (2012-11-12) entire text | 1-6 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 August 2022** | **06 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/030148**

| Patent document cited in search report | | | Publication date (day/month/year) | Patent family member(s) | | | Publication date (day/month/year) |
|---|---|---|---|---|---|---|---|
| WO | 2018/159649 | A1 | 07 September 2018 | US | 2019/0389189 | A1 | |
| | | | | claims, examples 1-8, comparative examples 1-2 | | | |
| | | | | CN | 110382232 | A | |
| | | | | KR | 10-2019-0126093 | A | |
| | | | | TW | 201841976 | A | |
| JP | 2020-12087 | A | 23 January 2020 | (Family: none) | | | |
| JP | 2014-65282 | A | 17 April 2014 | (Family: none) | | | |
| WO | 2020/170819 | A1 | 27 August 2020 | US | 2022/0126495 | A1 | |
| | | | | paragraph [0101] | | | |
| | | | | EP | 3928956 | A1 | |
| | | | | CN | 113453870 | A | |
| | | | | KR | 10-2021-0129678 | A | |
| | | | | TW | 202041581 | A | |
| WO | 2018/159648 | A1 | 07 September 2018 | US | 2021/0016484 | A1 | |
| | | | | EP | 3590995 | A1 | |
| | | | | CN | 110382602 | A | |
| | | | | KR | 10-2019-0122754 | A | |
| | | | | TW | 201842007 | A | |
| JP | 2012-220879 | A | 12 November 2012 | (Family: none) | | | |

Form PCT/ISA/210 (patent family annex) (January 2015)

**EP 4 397 698 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014065282 A
- JP 2000169623 A
- JP 2000302707 A